(19)

Europäisches Patentamt
European Patent Office
Office européen des brevets

(11) **EP 4 424 545 A1**

(12) **EUROPEAN PATENT APPLICATION**

(43) Date of publication:
**04.09.2024 Bulletin 2024/36**

(21) Application number: **23159132.2**

(22) Date of filing: **28.02.2023**

(51) International Patent Classification (IPC):
**B60L 53/62** (2019.01) **B60L 53/63** (2019.01)
**B60L 58/16** (2019.01) **H02J 7/00** (2006.01)

(52) Cooperative Patent Classification (CPC):
**B60L 53/63; B60L 53/62; B60L 58/16; H02J 7/0013**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hitachi, Ltd.**
**Tokyo 100-8280 (JP)**

(72) Inventors:
- **RYOHEI, Nakao**
  **EC2Y London (GB)**
- **VINOTH, Kumar N**
  **560055 Bangalore (IN)**
- **SHIN, Yamauchi**
  **100-8280 Tokyo (JP)**

(74) Representative: **Mewburn Ellis LLP**
**Aurora Building**
**Counterslip**
**Bristol BS1 6BX (GB)**

(54) **PROVISION OF CHARGING PLANS FOR ELECTRIC VEHICLES**

(57)     A computer-implemented method of providing optimised future charging plans (70) for charging batteries (91) of electric vehicles (90) of a fleet of electric vehicles (90) using electric vehicle chargers (81). The method comprises the steps of: obtaining respective future travel plans (10) for the electric vehicles (90); obtaining battery data (20) for the batteries (91) of the electric vehicles (90), the battery data (20) including, for each electric vehicle (90), battery state of charge (701, 702, 703) and battery state of health; and executing an optimisation process to determine future charging plans (70) for charging the electric vehicles (90) using the electric vehicle chargers (81), the optimisation process having one or more constraints, including a first constraint that requires the future charging plans (70) to increase the batteries' (91) states of charge to allow the electric vehicles (90) to perform their respective future travel plans (10). Within the one or more constraints, the optimisation process seeks to minimise deterioration rates of the batteries' (91) states of health.

Fig. 1

**Description**

*Field of the Invention*

The present invention relates to a method of providing future charging plans for charging batteries of electric vehicles of a fleet of electric vehicles, and a system configured to do the same.

*Background*

Increasingly, mass transit networks (e.g. buses, trains, trams, light rail vehicles) are being electrified in order to reduce the pollution associated with the vehicles operating on these networks and enable them to operate efficiently under power generated from renewable energy sources. One form of electrification is for such mass transit vehicles to contain batteries that store the energy required to drive the vehicles and allow them to execute their travel plans.

In comparison to mass transit vehicles powered by an internal combustion engine (ICE), mass transit battery electric vehicles (EVs) typically have a shorter distance that they can travel before refuelling/recharging is required, and the process of recharging an EV typically takes longer than refuelling an ICE mass transit vehicle. Therefore, in addition to developing a travel plan for each mass transit vehicle within a network, when a mass transit battery EV is used in a mass transit network an associated charging plan may be developed to set out when, and possibly where, the EV will be charged such that its battery is sufficiently charged for the EV to be able to execute its travel plan. In developing a charging plan for a mass transit EV that is associated with its travel plan, the conventional focus has understandably been placed on prevention of power outages of the EV between the time periods when the vehicle is available for charging and making use of charging facilities when they are available for the EV to use.

Mass transit vehicles typically have a longer lifespan and a greater lifetime mileage than private-use vehicles and therefore the batteries in mass transit battery-powered electric vehicles (EVs) are expected to undergo more charge-discharge cycles during their lifetime than private-use. However, batteries are known to deteriorate as the number of charge-discharge cycles they have undergone increases, with this deterioration typically being in the form of a reduced energy storage capacity. Accordingly, the batteries of a mass transit EV may have a shorter lifetime (i.e. the service life of the battery until its energy storage capacity reduces to a level where the EV is no longer able to execute its planned trips) than other components of a mass transit EV drivetrain such as the motor(s), inverter(s), and also a shorter lifetime than the ICE of conventional vehicles. This means that the lifespan of an EV may in effect be determined by the lifespan of that EV's battery. Accordingly, a mass transit EV may be configured such that its battery can be exchanged for one or more replacement batteries once the existing battery deteriorates to the point where its energy storage capacity is insufficient for the EV to be able to execute its planned trips.

Similar concerns arise with other forms of electric vehicle fleets, for example, electric micro-mobility type vehicles such as e-scooters and e-bicycles.

The present invention has been devised in light of the above considerations.

*Summary of the Invention*

It is desired to provide a method and system that can provide future charging plans for charging batteries of electric vehicles of a fleet of electric vehicles using electric vehicle chargers, the future charging plans being optimised such as to reduce deterioration rates of the batteries' state of health whilst still facilitating the execution of travel plans by the EVs.

Accordingly, in a first aspect there is provided a computer-implemented method of providing optimised future charging plans for charging batteries of electric vehicles of a fleet of electric vehicles using electric vehicle chargers. The method comprises the steps of: obtaining respective future travel plans for the electric vehicles; obtaining battery data for the batteries of the electric vehicles, the battery data including, for each electric vehicle, battery state of charge (SOC) and battery state of health (SOH); and executing an optimisation process to determine future charging plans for charging the electric vehicles using the electric vehicle chargers, the optimisation process having one or more constraints, including a first constraint that requires the future charging plans to increase the batteries' SOC to allow the electric vehicles to perform their respective future travel plans; wherein, within the one or more constraints, the optimisation process seeks to minimise deterioration rates of the batteries' SOH. Accordingly, it is possible to provide future charging plans that reduce the rate at which the SOH of electric vehicle batteries within the fleet of electric vehicles deteriorates and thus prolong the lifetimes of the batteries.

The SOH of a battery of an electric vehicle at a point in time may be defined as the energy capacity of the battery at that point in time divided by either the original energy capacity of the battery or the rated energy capacity of the battery. The energy capacity of a battery may be expressed with reference to the power of a battery (i.e. watt hours, Wh) or with reference to the current of a battery (i.e. amp hours, Ah).

The SOC of a battery of an electric vehicle at a point in time may be defined as the remaining energy capacity stored in the battery at that point in time (e.g. defined in Wh or Ah) divided by the energy capacity of the battery when fully charged (correspondingly defined, for example, in Wh or Ah) at that point in time.

The step of executing an optimisation process may comprise determining the one or more constraints based on data obtained, e.g. constraints based on the future travel plans and the battery data.

The steps of obtaining respective future travel plans for the electric vehicles and obtaining battery data for the batteries of the electric vehicles may be conducted concurrently with each other or sequentially in either order.

Where the electric vehicle chargers are powered by an electrical power grid, the method may further comprise a step of obtaining future charging capacity data of the electrical power grid and the optimisation process may have a second constraint that requires the future charging plans to stay within the future charging capacity of the electrical power grid. Advantageously, this can prevent the future charging plans developed by the method from overloading the power grid. The charging capacity of the electrical power grid may vary with time, and accordingly the second constraint may not be a fixed value, but a temporally dependent function.

The method may further comprise a step of obtaining charging capability data, the charging capability data including, for each electric vehicle (and possibly each electric vehicle charger), a maximum charging rate; where such data is obtained, the optimisation process may have a further constraint that requires the future charging plans to stay within the maximum charging rates of the electric vehicle batteries (and possibly the maximum charging rates of the electric vehicle chargers). This can reduce damage to the electric vehicle batteries or the electric vehicle chargers from excessive electrical currents during charging.

Where a price of electricity from the electrical power grid varies with time, the charging capability data may further include, for one or more items selected from the list including: each electric vehicle, each electric vehicle charger, and the fleet of electric vehicles, a maximum electricity price, with the vehicle(s) and/or charger only being available for charging when the electricity price is at or below the maximum electricity price.

The optimisation process may operate on an objective function that includes an expression for deterioration rate of battery SOH. The deterioration rate of battery SOH may be a deterioration rate of a single battery's SOH, or may incorporate the deterioration rates of multiple batteries' SOH, possibly incorporating battery SOH deterioration rates for all of the batteries. The battery SOH deterioration rate may be defined as a change in a battery's SOH per unit time or a change in a battery's SOH per charging cycle or a change in a battery's SOH per unit distance travelled by its associated electric vehicle.

The optimisation process may seek to determine future charging plans that converge the SOH of the batteries towards each other such that the batteries all arrive at a predetermined cut-off SOH at the same time. Typically, the predetermined cut-off SOH is a SOH below which a given battery is too low for the associated EV to execute its travel plan under any charging plan. On reaching the cut-off SOH, the batteries of most, or all, the EVs within the fleet can then be simultaneously replaced, which can reduce maintenance costs associated with battery replacement and increase the efficiency of the maintenance associated with battery replacement.

When seeking to converge the SOH of the batteries towards each other such that the batteries all arrive at a predetermined cut-off SOH at the same time, the optimisation process may comprise determining the future charging plans of the batteries sequentially in ascending order of their respective SOH, starting with the battery with the lowest SOH; and, after the future charging plan is determined for each battery in the ascending order sequence and before the future charging plan is determined for the next battery in the ascending order sequence, updating the one or more constraints for the remaining batteries in the ascending order sequence such that the one or more constraints for the remaining batteries account for the determined future charging plans. Advantageously, this computationally simplifies the optimisation process because there are fewer optimisation variables to be considered simultaneously in comparison to other possible implementations of the optimisation process.

However, according to another option, when seeking to converge the SOH of the batteries towards each other such that the batteries all arrive at a predetermined cut-off SOH at the same time, the optimisation process may comprise: generating an expression for an overall deterioration rate of battery SOH that is a weighted linear combination of deterioration rates of the batteries, the weightings being set according to the SOH of the batteries; and executing the optimisation process with said expression included in the objective function. Advantageously, this makes the optimisation process computationally efficient because there is a reduced risk of the optimisation process needing to be re-started due to a failure to arrive at a solution. The weightings may be negatively correlated with the SOH of the batteries if the objective function of the optimisation is such that it is directly proportional to the deterioration rates of the batteries' SOH, for example, the weightings may decrease in proportion to the states of health of the batteries. The weightings may be positively correlated with the SOH of the batteries if the objective function of the optimisation is such that it is inversely proportional to the deterioration rates of the batteries' SOH.

The future travel plan for each electric vehicle may include: an indication of one or more time periods when the vehicle is in use; an indication of one or more time periods when the vehicle is available for charging; and an estimated energy use and/or power use profile for one or more time periods when the electric vehicle is in use.

The future charging plans may include one or more future charging plan variables, and the optimisation process may be conducted by varying one or more future charging plan variables as control variables of the optimisation process. The future charging plan variables may be selected from the group consisting of: a charging rate of the battery; a state of charge at the end of a charging period; an average state of charge of the battery during a period when the vehicle is available for charging; a charging frequency; an average state of charge of the battery during execution of the future travel plan; a start time of a charging period; and an end time of a charging period.

The optimisation process may comprise: accessing a database containing a plurality of charging profiles and associated battery SOH deterioration rates, wherein a charging profile relates to a given battery SOH and is a line on a plot of battery SOC against time; and constructing a future charging plan by assigning, from the database, one or more charging profiles whose related battery SOH match that of the electric vehicle to one or more time periods when the electric vehicle is available for charging. This can make the optimisation process faster by providing pre-defined charging profiles that have already had their associated battery SOH deterioration rates determined.

The database of charging profiles may be filtered such that only charging profiles whose related battery SOH matches that of the electric vehicle whose future charging plan is being determined are accessible, and may be further filtered according to the start SOC, end SOC, and time period available for charging within the future charging plan, to reduce the number of charging profiles in the database requiring consideration.

The battery SOH deterioration rate associated with each charging profile may be based on a computer simulation of a battery charging under that charging profile. Advantageously, this is generally more efficient than an alternative option of conducting physical experiments on batteries.

Where the database of charging profiles is used in the optimisation process, the battery SOH deterioration rate associated with a given charging profile is generally a function of the battery's SOH, and the optimisation process may further comprise providing SOH information to the database. Accordingly, the battery SOH deterioration rate associated with the charging profile can be better matched to the battery the future charging plan is for.

The battery data may further include electrochemical properties of a battery. The battery SOH deterioration rate associated with each charging profile in the database may be a function of the electrochemical properties of the battery it is for. Thus, providing the electrochemical properties of the battery for which a future charging plan is being developed allows the provided battery SOH deterioration rate associated with the charging profile to be better matched to that battery.

The computer-implemented method of providing optimised future charging plans may further comprise a step of communicating the future charging plans to the corresponding electric vehicles, and/or to the electric vehicle chargers, for automatic implementation of the future charging plans. The future charging plans may be directly or indirectly communicated to these entities.

In a second aspect there is provided a procedure for charging batteries of electric vehicles of a fleet of electric vehicles using electric vehicle chargers, the procedure including: performing the method according to the first aspect; and charging the batteries of the electric vehicles using the electric vehicle chargers by implementing the future charging plans determined by the method.

In a third aspect there is provided a computer-implemented operation management system configured to implement the method according to the first aspect.

For example, in the third aspect, the system may comprise a constraint decision unit configured to: obtain respective future travel plans for the electric vehicles; obtain battery data for the batteries of the electric vehicles, the battery data including, for each electric vehicle, battery state of charge and battery SOH. The system may further comprise a future charging plan decision unit configured to execute an optimisation process to determine future charging plans for charging the electric vehicles using the electric vehicle chargers, the optimisation process having one or more constraints, including a first constraint that requires the future charging plans to increase the batteries' states of charge to allow the electric vehicles to perform their respective future travel plans. within the one or more constraints, the optimisation process seeks to minimise deterioration of the batteries' states of health. Accordingly, a system able to determine future charging plans that reduce the rate at which the states of health of electric vehicle batteries within the fleet of electric vehicles deteriorates and thus prolong the lifetimes of the batteries is provided.

The constraint decision unit may comprise a power management unit configured to obtain the battery data and a charging time management unit configured to obtain the future travel plans.

Where the system utilises charging capacity data, the power management unit may be configured to obtain the charging capacity data.

Where the system utilises charging capability data, the charging time management unit configured to obtain the charging capability data.

The future charging plan decision unit may be in communication with a database containing a plurality of charging profiles and associated battery SOH deterioration rates, wherein each charging profile relates to a given battery SOH and is a line on a plot of battery state of charge against time. The database may reside within the operation management system or may be located externally to the operation management system.

In a fourth aspect, there is provided a computer program arranged, when run on a computer, to perform the method of the first aspect.

In a fifth aspect, there is provided a computer readable storage medium carrying the computer program according to the fourth aspect.

The fleet of electric vehicles for which the first, second, third, fourth and fifth aspects of the present disclosure provide, or are configured to provide, optimised charging profiles may form part of a mass transit system. Such vehicles in a mass transit system may be, for example, one or more of: buses, trains, trams, and light rail vehicles. According to another option, the fleet of vehicles may be electric taxis or electric micro-mobility type vehicles (e.g. electric scooters, e-bikes). The fleet of vehicles may comprise a mixture of any two or more vehicles selected from the aforementioned vehicles.

The invention includes the combination of the aspects and preferred features described except where such a combination is clearly impermissible or expressly avoided.

*Summary of the Figures*

Embodiments illustrating the principles of the present disclosure will now be discussed with reference to the accompanying figures, in which:

Figure 1 illustrates interconnections of a computer-implemented operation management system configured to provide optimised future charging plans for charging batteries of electric vehicles of a fleet of electric vehicles;

Figure 2 is an information flow diagram for the computer-implemented operation management system of Figure 1;

Figure 3 is a flowchart for a method of providing an optimised future charging plans for charging the batteries of a fleet of EVs;

Figure 4 illustrates schematically future travel plans for three EVs alongside a graph of available charging power from a grid supply;

Figures 5A - 5F illustrates schematically different possible charging profiles for an EV battery;

Figure 6 illustrates schematically future travel plans and charging plans for three EVs alongside a graph of the available charging power from a grid supply and the power consumption of electric vehicle chargers;

Figure 7 illustrates schematically future travel plans and future charging plans for three EVs alongside a graph of state-of-charge information for the three EVs;

Figure 8 is a flowchart for an implementation of an optimisation process; and

Figures 9A and 9B show schematic plots of the state of health of the batteries of three EVs against time with and without the optimised future charging plans implemented.

*Detailed Description of the Invention*

Aspects and embodiments of the present invention will now be discussed with reference to the accompanying figures. Further aspects and embodiments will be apparent to those skilled in the art.

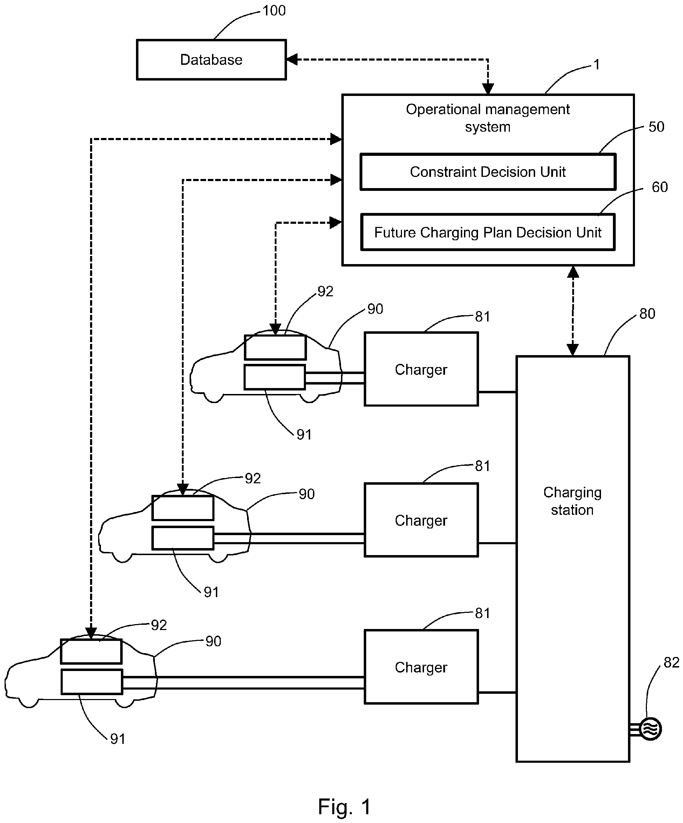

Figure 1 illustrates interconnections of a computer-implemented operation management system 1 configured to provide optimised future charging plans for charging the batteries of battery electric vehicles (EVs) 90 of a fleet of EVs using electric vehicle chargers 81.

Each EV 90 contains a battery 91 and a communications unit 92 that receives data from the battery 91. The communications unit 92 of each EV 90 is in networked communication with the operational management system 1 such that data can be transferred from the EV 90 to the system 1 and vice versa.

The battery 91 of each EV 90 shown in Figure 1 is connected to an electric vehicle charger 81 that is configured to increase a state of charge (SOC) of that battery 91. The SOC of a battery 91 of an EV 90 at a point in time may be defined as the energy electrochemical energy stored in the battery 90 at that point in time divided by the energy capacity of the battery 90 at the same point in time.

$$SOC = \frac{\text{stored electrochemical energy }(t)}{\text{energy capacity }(t)}$$

The electric vehicle chargers 81 in Figure 1 belong to the same charging station 80. The charging station 80 is provided with a power source 82 that provides the electrical power required to charge the batteries 91 of the EVs 90 connected to the charging station 80. Typically, the power source 82 is an electrical power grid, but the power source 82 may also take other forms, such as generator(s), solar cell(s), wind turbine(s), or the power source 82 may be a combination of one or more of these forms.

The charging station 80 is also in networked communication with the operational management system 1 such that data can be transferred from the charging station 80 to the system 1 and vice versa. Whilst there is only a single charging station 80 and its associated chargers 81 illustrated in Figure 1, it can be appreciated that the system 1 may be in networked communication with a plurality of charging stations 80, each of which may comprise one or more chargers 81 for EVs 90.

The connection of the operational management system 1 to the EVs 90 and the charging station 80 allows the system 1 to obtain input data from these sources to use in the generation of optimised future charging plans and to output said optimised future charging plans such that they can be executed when charging the EVs 90 at the charging station 80.

The operational management system 1 contains a constraint decision unit 50 that is configured to obtain the data from the EVs 90 and charging station 80 and define one or more constraints on an optimisation process. A first constraint on the optimisation process requires the future charging plans to increase the batteries' SOCs to a level that allows the EVs 90 to perform their respective future travel plans. Said one or more constraints are communicated from the constraint decision unit 50 to a future charging plan decision unit 60 that executes the optimisation to determine future charging plans for the batteries 91 of the EVs 80. Within the one or more constraints, the optimisation process seeks to minimise deterioration rate of the batteries' SOH such that the lifetime of the batteries can be increased whilst still allowing the EVs 90 to execute their future travel plans.

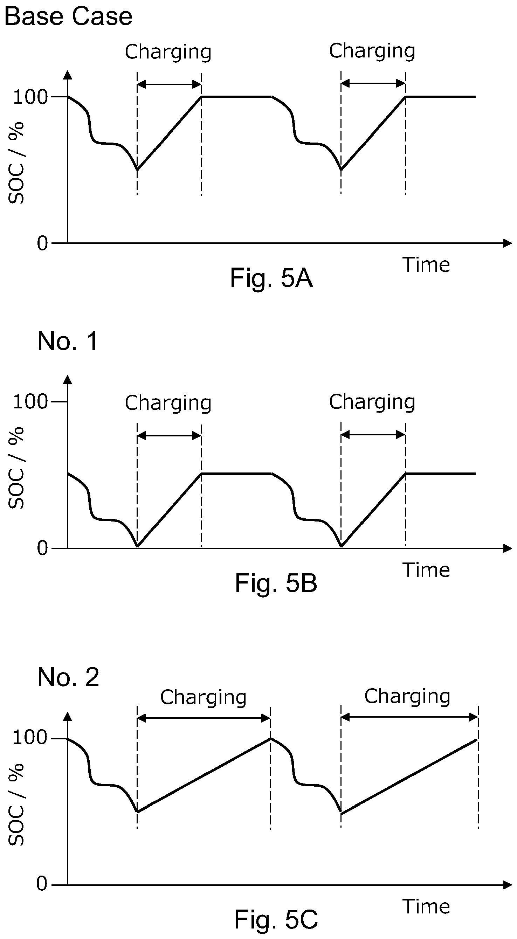

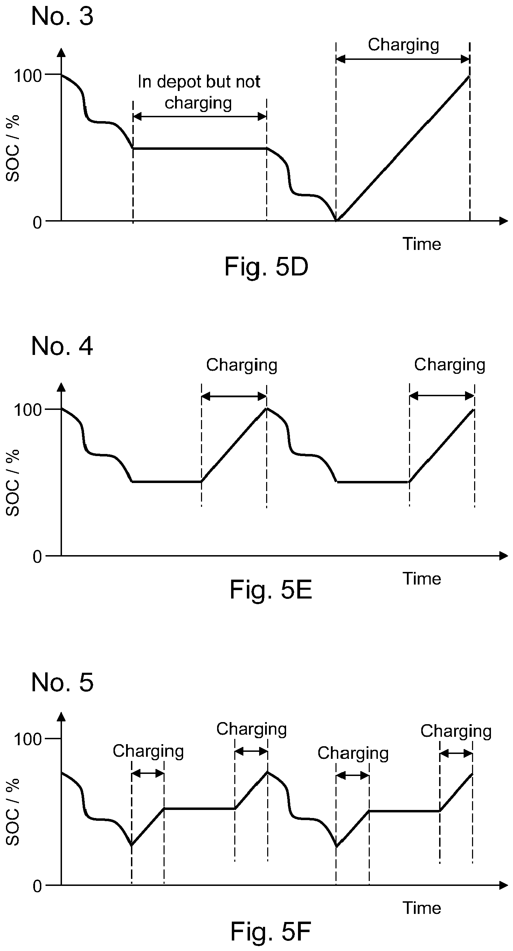

The future charging plan decision unit 60 is also connected to a database 100 that contains a plurality of charging profiles and associated battery state of health (SOH) deterioration rates. The database 100 and its role in the optimisation of future charging plans for the batteries of the EVs 90 is discussed further in relation to the charging profiles illustrated in Figure 5. In Figure 1 the database 100 resides outside the operational management system 1 and is in networked connection with the system 1 such that data can be transferred from the database 100 to the system 1 and vice versa.

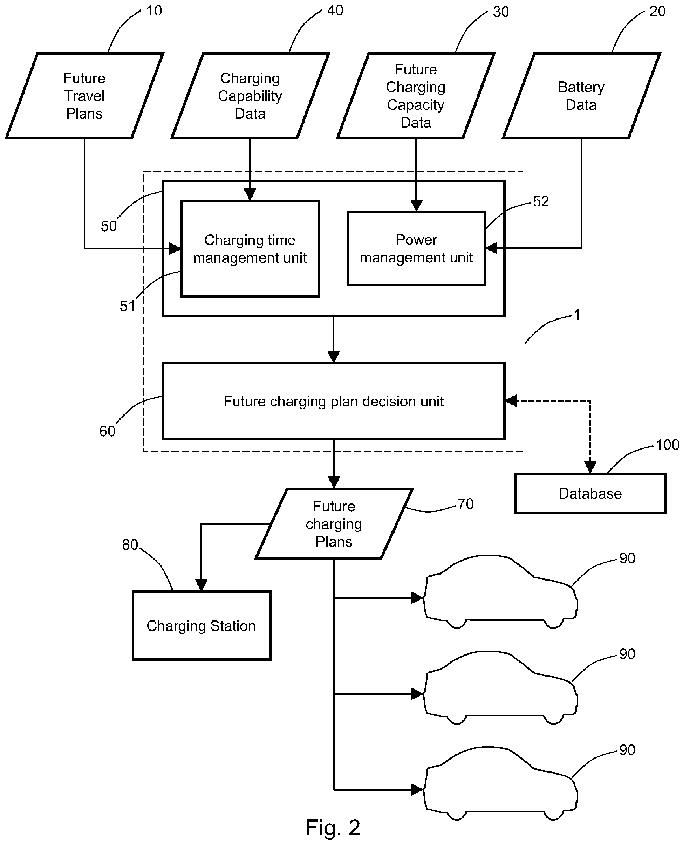

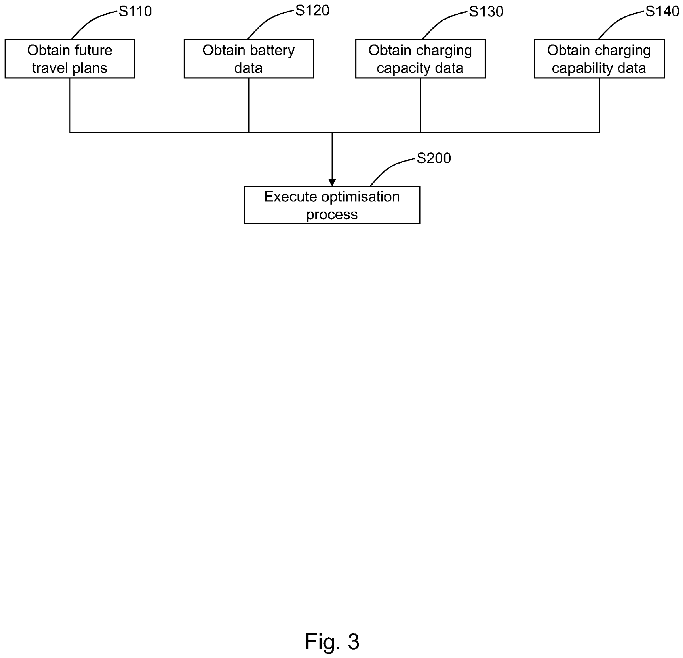

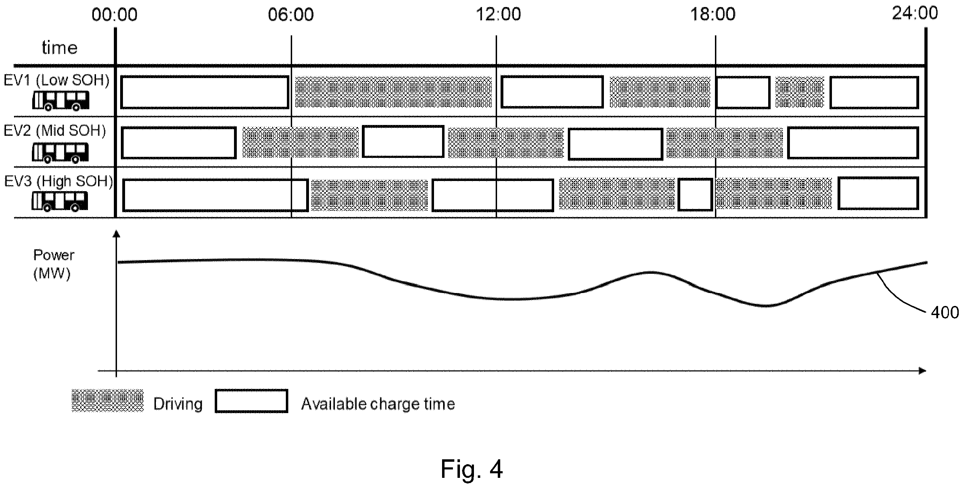

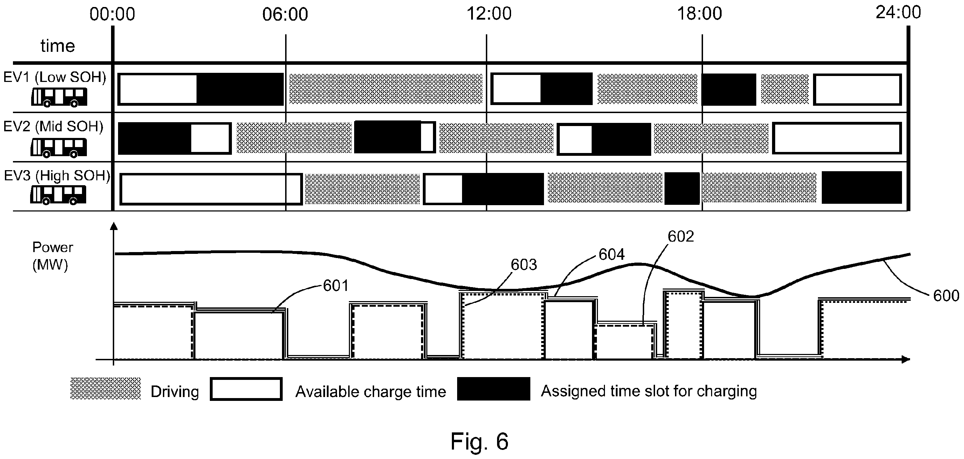

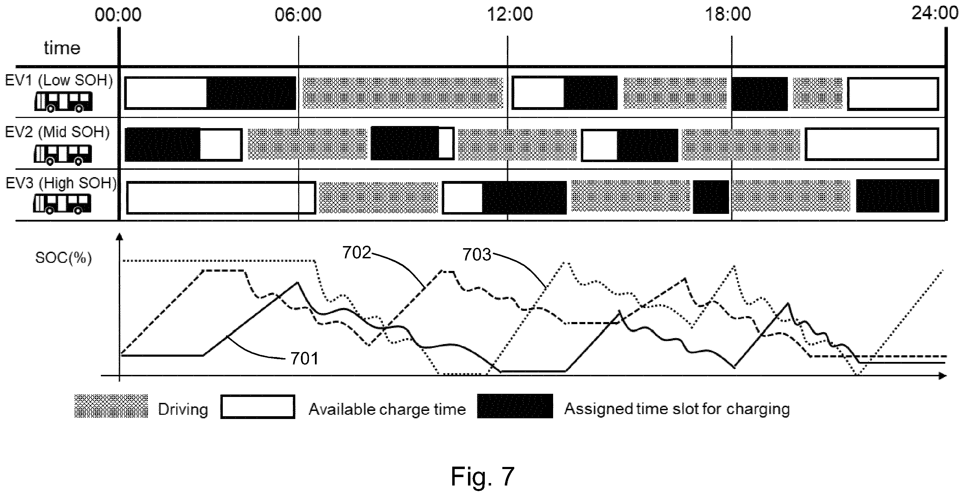

Figure 2 is an information flow diagram for the computer-implemented operation management system 1 of Figure 1 and its inputs and outputs. Features in Figure 2 corresponding to those in Figure 1 are provided with like reference numbers. Details of the information flow illustrated in Figure 2 are described below with reference to Figures 3 to 7. Figure 3 is a flowchart for a method of providing an optimised future charging plans 70 for charging the batteries of a fleet of EVs. Figure 4 illustrates schematically future travel plans for three EVs alongside a graph of available charging power from a grid supply. Figures 5A - 5F illustrate schematically different charging profiles for an EV battery. Figure 6 illustrates schematically future travel plans for three EVs alongside a graph of the available charging power from a grid supply. Figure 7 illustrates schematically travel plans and charging plans for three EVs alongside a graph of SOC information for the three EVs.

Four types of input data into the system 1 are present in Figure 2: respective future travel plans 10 of EVs 90 for which the system 1 is optimising future charging plans 70; battery data 20 for the batteries of the EVs 90; future charging capacity data 30; and charging capability data 40. To provide optimised future charging plans 70, the constraint decision unit 50 within the system 1 obtains at least the future travel plans 10 and the battery data 20, and typically also the future charging capacity data 30 and the charging capability data 40. The constraint decision unit 50 in Figure 2 comprises a charging time management unit 51 that is configured to obtain the future travel plans 10 and the charging capability data 40, and also a power management unit 52 that is configured to obtain the battery data 20 and the charging capacity data 30.

Future travel plans 10 indicate, for each of the EVs 90 for which the system 1 is configured to provide optimised future charging plans 70, the energy use requirement of the EV 90 in order to be able to execute its planned travel. The future travel plan 10 of an EV 90 may simply include the route that the EV is scheduled to travel along and the timings at which it is scheduled to do so, from which an estimated energy use can be calculated based on, for example, one or more of: the distance and elevation change of the route, the mass of the EV, the traffic conditions, and the required average speed, which may be provided with the future travel plan 10. Alternatively, a future travel plan 10 may include a pre-calculated estimated energy use profile and/or a pre-calculated estimated power use profile for one or more time periods within the future travel plan when the EV 90 is in use. Typically, with a fleet of EVs 90 that each has a future travel plan 10, each future travel plan 10 may include one or more trips that the EV 90 is scheduled to take and the times at which the EV 90 is scheduled to be driving. The future travel plans 10 are typically also repeated on a regular basis, for example Figure 4 provides future travel plans 10 for three EVs 90: EV1, EV2 and EV3 for a 24-hour period that is then repeated every 24 hours. The EVs 90 in Figure 4 are part of a fleet of buses. For each EV 90, the future travel plan 10 indicates the periods at which the vehicle is driving, and therefore unavailable for charging at a charging station 80. The periods in between driving are defined as times at which the EV 90 is available for charging. In the example of Figure 4, each EV 90 has several periods during the day during which it is scheduled to be driving (i.e. the EV's future travel plan includes multiple trips), and the duration of these periods varies for each EV 90, meaning that, even if the rate of energy consumption for the EV is assumed to be constant, the minimum required SOC of the battery of the EV 90 in order to carry out each trip within the plan 10 without the battery running out of charge will differ. Figure 4 further illustrates how there are occasions during the day where a plurality, or even all, of the EVs 90 are available to be charged, occasions during the day where none of the EVs 90 is available to be charged, and also occasions during the day where only one of the EVs 90 is available to be charged.

Battery data 20 is data specific to each EV 90 and includes at least the SOC of that EV's 90 battery and the battery's SOH. The SOH of a battery of an EV 90 at a point in time may be defined as the energy capacity of the battery at that point in time divided by either the original energy capacity of the battery or the rated energy capacity of the battery.

$$SOH = \frac{\text{energy capacity } (t)}{\text{original energy capacity}}$$

The battery data 20 can be used by the constraint decision unit 50 to convert the estimated energy use into a minimum state of charge ($SOC_{min}$) that the battery of the EV 90 must have in order to execute the future travel plan:

$$SOC_{min} = \frac{\text{estimated energy use}}{\text{energy capacity } (t)} = \frac{\text{estimated energy use}}{SOH \times \text{original energy capacity}}$$

The original energy capacity of the battery may be provided with the battery data 20 or may already be known by the system 1. Where the future travel plan 10 includes multiple periods of driving (such as those shown in Figure 4), then the minimum SOC may be calculated for the start of each period of driving. Accordingly, the minimum SOC effectively acts as a first constraint on the optimisation process for determining future charging plans for the EVs 90: the future charging plans 70 must increase the batteries' SOC to a level that allows the EVs 90 to perform their respective future travel plans 10 (i.e. the minimum SOC values for the batteries must be attained at the relevant points in time).

In the implementation show in Figures 1 and 2, the power source 82 for the charging station 80 is an electrical power grid and future charging capacity data 30 is obtained by the power management unit 52. The future charging capacity data 30 indicates the available charging power from a grid supply - essentially a power cap on how much power can be drawn from the grid supply for recharging the fleet of EVs 90 at a given point in time. Figure 4 includes a line plot providing an illustration of the available charging power from a grid supply 400 over the 24-hour period of the future travel plans in Figure 4. Where a charging station 80 is powered by a grid supply of electricity and has a power cap, the charging power available from the grid to that charging station 80 is a second constraint on the optimisation of the future charging plans 70 by the system 1: the combined power draw according to the future charging plans 70 for the plurality of EVs 90 at a given point in time should stay within the charging capacity of the electrical grid 400 at that time.

In the implementation shown in Figures 1 and 2, charging capability data 40 is obtained by the charging time management unit 51. The charging capability data 40 includes at least, for each EV battery 91, a maximum charging rate for which the battery 91 is rated. It can be appreciated that the charging rate (i.e. the rate at which the battery's SOC increases) can influence the rate of deterioration of the battery's SOH, $\frac{d(SOH)}{dt}$. Charging capability data 40 may also be obtained from the charging station 80 such that a maximum charging rate of a charger 81 can be obtained. Whilst the response of a battery 91 to a given charging rate is dependent on the electrochemical properties of the battery 91, generally, faster charging rates are associated with faster deterioration rates of battery SOH. The maximum charging rate for a battery 91 and charger 81 pairing may be set according to the maximum desired deterioration rate of battery SOH, the safety rating of the battery 91 or charger 81, or some combination thereof. The maximum charging rate may be a further constraint on the future charging plans 70: the future charging plans 70 should be such that the planned charging rates of the batteries 91 stays within the maximum charging rates of the batteries 91 and chargers 81.

The constraint decision unit 50 is configured to determine one or more constraints on the optimisation process based on the data obtained by the charging time management unit 51 and the power management unit 52. As discussed above, the first constraint on the optimisation process requires the future charging plans 70 to increase the batteries' SOC to allow the EVs 90 to perform their respective future travel plans 10. A second constraint that may be placed on the optimisation process is one which requires the future charging plans 70 to stay within the charging capacity of the electrical power grid. A further constraint that may be placed on the optimisation process is one which requires that the future charging plans 70 stay within the maximum charging rate of any of the EV batteries 91 and electric vehicle chargers 81.

The one or more constraints, having been defined by the constraint decision unit 50, are provided to the future charging plan decision unit 60. The future charging plan decision unit 60 is configured to carry out an optimisation process using the constraint(s) to determine future charging plans 70 for the EVs 90. The optimisation process may take the form of non-linear programming.

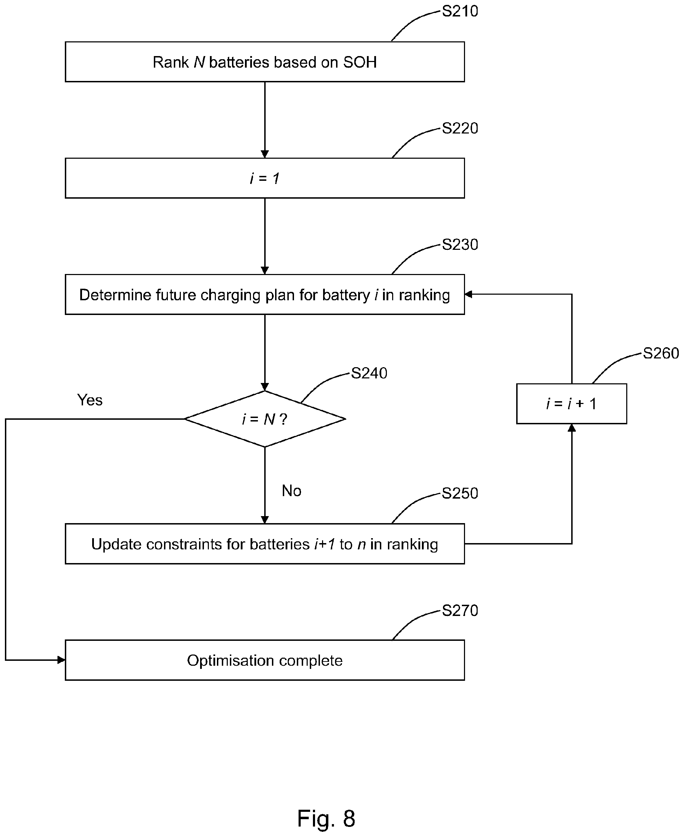

Within the one or more constraints, the optimisation process seeks to minimise the deterioration rates of the batteries' SOH. In other words, the future charging plans 70 determined by the future charging plan decision unit 60 are determined by seeking future charging plans 70 that will decrease the deterioration rates of batteries' SOH relative to a base case. This is typically done by the optimisation process operating on an objective function that includes an expression for the deterioration rate of battery SOH, $\frac{d(SOH)}{dt}$. Such an objective function is discussed further below in relation to Figure 8. The future charging plan decision unit 60 is connected to the database 100 and can obtain charging profiles and associated battery SOH deterioration rates from the database 100 for use in determining the optimised future travel plans 70. This is discussed further in relation to the charging profiles illustrated in Figure 5.

Having determined the future charging plans 70, the future charging plan decision unit 60 is configured to output the plans 70 to the EVs 90 and the charging station(s) 80 that will carry out the charging of those EVs 90 such that the future charging plans 70 can be automatically implemented by the EVs 90 and chargers 81 after being determined by the system 1.

The flowchart in Figure 3 includes the steps of obtaining respective future travel plans for the EVs S110, obtaining battery data for the batteries of the electric vehicles S120, obtaining charging capacity data S130 and obtaining charging capability data S140. Having obtained this data, the system executes the optimisation process to determine future charging plans for the electric vehicles S200, subject to the one or more constraints based on the obtained data. Steps S110 and S120 of obtaining respective future travel plans for the electric vehicles and obtaining battery data for the batteries of the electric vehicles may be conducted concurrently with each other or sequentially in either order. Similarly, optional steps S130 and S140, where executed, may be conducted concurrently with each other or sequentially in either order and concurrently or sequentially with steps S110 and S120.

Where the future travel plan 10 of an EV 90 includes multiple trips and multiple periods of time between those trips where the EV 90 is available for charging, then the future charging plan 70 of an EV 90 comprises multiple charging profiles, each charging profile corresponding to one of those time periods where the EV 90 is available for charging, relating to a given battery SOH, and being a line on a plot of battery SOC against time. In carrying out an optimisation process to determine future charging plans 70 that seek to minimise battery SOH deterioration rate (step S200), one or more control variables for a charging profile of an EV 90 can be set within its future charging plan 70 in order to influence the impact of charge-discharge cycles on the battery's SOH. Figures 5A - 5F provide illustrations of different possible charging profiles and Table 1 below presents numerical data associated with the charging profiles in Figures 5A - 5F. Each of Figures 5A - 5F also includes estimated energy use profiles for time periods when the electric vehicle is in use. Figure 5A relates to a "base-case", while Figures 5B - 5F relate to variations numbered 1 - 5 respectively from that base-case.

Each charging profile is specific to a change in SOC that is required within a certain time period. That is, the start SOC and final SOC of a charging profile are fixed, and the charging profile then defines how the SOC is increased from the start SOC to the final SOC within the time period of the charging profile. Each charging profile has an associated battery SOH deterioration rate (i.e. how much the SOH of a battery deteriorates as a result of executing the charging profile as part of a future charging plan). This associated battery SOH deterioration rate is a function of the current SOH of the battery - in other words, the current SOH of a battery influences the rate of deterioration of that battery's SOH when a given charging profile is applied to that battery. Therefore, each charging profile, having a battery SOH deterioration rate associated with it, relates to a given battery SOH.

**Table 1**

| Charging profile candidate | Charging Conditions | | | | | | Effect on suppression of SOH deterioration rate |
|---|---|---|---|---|---|---|---|
| | Start SOC (%) | Final SOC (%) | Current (A) | Time (hr) | Charging Frequency (/day) | Minimisation of rest time after charge | |
| Base-case | 50 | 100 | 100 | 2 | 1 | - | N/A |
| No. 1 | 0 | 50 | 100 | 2 | 1 | - | High |
| No. 2 | 50 | 100 | 50 | 4 | 1 | ON | Low |
| No. 3 | 0 | 100 | 100 | 4 | 0.5 | ON | Medium |
| No. 4 | 50 | 100 | 100 | 2 | 1 | ON | Medium |
| No. 5 | 25 | 75 | 100 | 2 | 1 | ON | High |

The base-case profile of Figure 5A is for an EV that is charged at the maximum charging rate as soon as the EV is available for charging, and is charged to a SOC of 100%, before remaining stationary for a period of time at an SOC of 100% until the EV is dispatch on a trip and discharged. Two such charge-discharge cycles are shown in Figure 5A: the EV executes two trips as part of its future travel plan (the energy consumption profiles for those trips is illustrated in Figure 5A by the non-linear portions of the SOC line where SOC is decreasing), starting the first trip fully charged, being fully recharged in the first period in which the EV is available for charging between the first and second trips, executing the second trip and then being fully recharged in the second period in which the EV is available for charging at the end of the second trip. Table 1 lists the battery SOC of the EV at the start of the charging periods / end of the discharge periods as 50%.

Figures 5B - 5F then provide illustrations of different charging profiles where one or more variables associated with the base-case charging profile have been varied to provide new charging profiles that have reduced rates of battery SOC deterioration than the base-case charging profile in Figure 5A.

Charging profile No. 1 in Figure 5B differs from the base-case in Figure 5A in that the average SOC of the battery during execution of the future travel plan (i.e. during the periods of time when the vehicle is carrying out a trip) has been reduced. Alternatively, the modification in Figure 5B could be understood as reducing the average SOC of the battery during the periods when the vehicle is available for charging (i.e. the periods of time when the vehicle is not carrying out a trip). That is, rather than charging and discharging the battery in such a manner that the range of SOC values is always between 50% and 100% (see Table 1), charging profile No. 1 in Figure 5B is such that the SOC varies between 0% and 50%. Starting each trip in the EVs future travel plan with a SOC of 50% is sufficient for the EV to be able to complete each trip and return to a charging station to be recharged before the next trip in its future travel plan. By reducing the average SOC of the battery and avoiding charging the battery to high SOC values, the rate of battery SOH deterioration can be suppressed in comparison to the base-case illustrated in Figure 5A. Charging plan No. 1 is given a rating of 'High' in Table 1 for its effect of suppression of battery SOH deterioration rate.

Charging profile No. 2 in Figure 5C differs from the base-case in Figure 5A in that the charging rate of the battery is reduced. Alternatively, the modification in Figure 5C could be understood as reducing the average SOC of the battery during the periods when the vehicle is available for charging (i.e. the periods of time when the vehicle is not carrying out a trip). Table 1 lists the charging current in the base-case as 100 amps, whilst the charging rate in charging profile No. 2 is 50 amps. The effect of this change on the charging profile is that in Figure 5B the battery only reaches an SOC of 100% immediately before the EV is dispatched on the next trip in its future travel plan. Accordingly, the amount of time that the battery spends with an SOC at or near 100% is reduced and the rate of increase in energy stored in the battery is decreased, both of which assist in suppressing the rate of deterioration of battery SOH. Charging profile No. 2 is given a rating of 'Low' in Table 1 for its effect of suppression of SOH deterioration rate. Decreasing the charging rate in the manner shown in Figure 5C is not as effective in suppressing the battery SOH deterioration rate as reducing the average SOC of the battery during execution of the future travel plan in the manner shown in Figure 5B.

Charging profile No.3 in Figure 5D differs from the base-case in Figure 5A in that the frequency with which the battery is charged is reduced: rather than charging the battery before every trip by the EV, the battery is only charged after every other trip. Alternatively, the modification in Figure 5D could be understood as reducing the average SOC of the battery during the periods when the vehicle is available for charging (i.e. the periods of time when the vehicle is not carrying out a trip) or as reducing the average SOC of the battery during execution of the future travel plan (i.e. during the periods of time when the vehicle is carrying out a trip). The battery has a SOC of 50% after the first trip, having started that trip with an SOC of 100%, which then allows the EV to complete a further trip and reach a charging station with an SOC of 0%. The battery is then recharged from an SOC of 0% to 100% at the maximum charging rate, such that the EV is fully charged in time for the next trip on its future travel schedule. Accordingly, the EV has a period of time between trips where it is available for charging but is not charged at all and has a constant SOC of 50%. Accordingly, the amount of time that the battery spends at an SOC at or near 100% is reduced and a greater range of the battery's capacity is used (0% to 100%). Charging profile No. 3 is given a rating of 'Medium' in Table 1 for its effect of suppression of battery SOH deterioration rate. Decreasing the frequency of charging in the manner shown in Figure 5D is not as effective in suppressing the deterioration rate of battery SOH as reducing the average SOC of the battery in the manner shown in Figure 5B, but is more effective than reducing the charging rate in the manner shown in Figure 5C, because the average SOC of the battery under the charging profile No.3 is lower than that under charging profile No.2.

Charging profile No. 4 in Figure 5E differs from the base-case in Figure 5A in that the start and end times of charging have been shifted within the periods in which the EV is available for charging. Alternatively, the modification in Figure 5E could be understood as reducing the average SOC of the battery during the periods when the vehicle is available for charging (i.e. the periods of time when the vehicle is not carrying out a trip). Rather than having a period at the end of charging when the EV's SOC is held at 100% before it is dispatched on a trip (as is the case in the base-case scenario), the start and end times of charging are set such that as soon as the EV reaches a SOC of 100% it is dispatched on a trip and the period of time that the EV has a SOC of 100% is reduced. Charging profile No. 4 is given a rating of 'High' in Table 1 for its effect of suppression of battery SOH deterioration rate.

Charging profile No. 5 in Figure 5F differs from the base-case in Figure 5A in that each charging period in the base-case has been split into two charging periods in charging profile No. 5, separated by a period of not charging or discharging, and the average SOC of the battery during the periods when the electric vehicle is available for charging (i.e. the periods of time when the vehicle is not carrying out a trip) has been reduced in comparison to the base case. That is, rather than charging and discharging the battery in such a manner that the SOC value increases linearly from 50% to 100% during charging (see Table 1) and then held at 100% for a period of time before the EV is dispatched, charging profile No. 5 in Figure 5F is such that the SOC is increased from 25% to 50% initially, held at 50% for a period of time, and then increased from 50% to 75% immediately before the EV is dispatched on a trip. Accordingly, charging profile No. 5 is able to increase the amount of time that the battery of the EV spends with an SOC around 50%, which is beneficial in reducing the deterioration rate of battery SOH in comparison to time spent with an SOC closer to, or at, an SOC of 0% or 100%. Charging profile No. 5 is given a rating of 'High' in Table 1 for its effect of suppression of battery SOH deterioration rate.

Based on the above discussion of the charging profiles in Figures 5A - 5F, it can be appreciated that the control variables on the charging profile of an EV that can be set within the future charging plans in order to influence the impact of charge-discharge cycles on the SOH of the battery (i.e. future charging plan variables) includes one or more variables selected from the group consisting of:

- a charging rate of the battery;

- a state of charge at the end of a charging period;

- a charging frequency;

- an average state of charge of the battery during a period when the vehicle is available for charging;

- an average state of charge of the battery during execution of the future travel plan;

- a start time of a charging period; and

- an end time of a charging period.

Furthermore, the charging profiles illustrated in Figures 5A - 5F are merely examples of a wide range of charging profiles that can be generated based on control of one or more of the above variables. The future charging plan for an EV can be considered as being made up of one or more charging profiles that each define whether and how the SOC of an EV should be increased during a period that the EV is available for charging. In order to be able to determine the effect of a given future charging plan on the rate of deterioration of a battery's SOH, the effect of the one or more charging profiles making up that future charging plan on the deterioration rate of a battery's SOH can be obtained and combined.

If not available from other sources, in order to determine the effect of a given charging profile on the deterioration rate of a battery's SOH, either physical experiments on the battery undergoing repeated charging cycles according to the charging profile, or computer simulations of the battery charging under that charging profile can be used to determine the deterioration rate of a battery's SOH under that charging profile.

Typically, in carrying out the optimisation process according to the present disclosure, the system is connected to a database containing a plurality of charging profiles akin to those illustrated in Figures 5A-5F, and their associated battery SOH deterioration rates, each charging profile relating to a given battery SOH. The charging profile provides the information on if/how the battery is to be charged in a time period when the vehicle is available for charging - a line on a plot of battery SOC against time. In executing the optimisation process, the future charging plan decision unit accesses the database containing the plurality of charging profiles and associated battery SOH deterioration rates and can assign one or more of the charging profiles to one or more respective time periods in the future charging plan when an EV is available for charging. Specifically, a charging profile whose related battery SOH matches that of the EV is selected from the database and assigned to a time period in the future charging plan by first using the one or more constraints on the optimisation process to filter the plurality of charging profiles within the database to eliminate those that do not satisfy the plurality of constraints and secondly selecting from the filtered charging profiles the charging profile that has the lowest associated battery SOH deterioration rate. The battery SOH deterioration rate associated with a given charging profile is a function of the battery's SOH and the battery's electrochemical properties. Accordingly, the SOH and the electrochemical properties of the battery are provided to the database such that the battery SOH deterioration rate associated with a given charging profile is specific to the battery to which the future charging plan relates.

Figure 6 is similar to Figure 4, but further includes details of the future charging plans developed by the system 1 alongside the future travel plans. Figure 6 includes an indication of the periods of time that each of the EVs spend charging (solid black boxes) within the periods of time that it is available for charging (outline-only boxes). Figure 6 also includes a line plot indicating the power demand of charging each of the EVs (demands 601, 602, 603, corresponding to EV1, EV2 and EV3, respectively) at different points in time and the total power demand 604 when carrying out that plan in comparison to the power available from the electrical power grid 600. Most notably in Figure 6, because of the second constraint of staying within the charging capacity of the electrical power grid 600, there is no point in time in the future charging plan at which there is more than one EV charging, because at no point in time is there sufficient power available from the electrical power grid 600 to allow for simultaneous charging of multiple EVs.

It is evident from the information on the future charging plans presented in Figure 6 that the future charging plans have been optimised by selecting charging profiles where at least the start and end times of charging have been controlled in comparison to the base-case charging profile of charging at maximum charging rate as soon as the EV reaches the charging station: EV1 in Figure 6, which is available for charging from 22:00 to 06:00, only undergoes charging from 03:00 to 06:00, immediately after which it is dispatched for the next trip in its future travel plan. However, due to the second constraint of there being a lack of availability of grid power 600 to allow charging of multiple EVs simultaneously, EV2 and EV3 have their charging shifted to earlier within the time periods that they are available for charging: EV2 and EV3 are available for charging between 21:00 and 04:00 and 22:00 and 06:30, respectively, but are charged early within those time periods and then have a period (e.g. from 06:30 to 10:00 for EV3) in which they are sufficiently charged to conduct the next trip in their future travel plans and do not undergo any further charging, but remain stationary. As discussed above in relation to Figure 5E, it is preferable from the viewpoint of battery SOH for the charging profile to be such that the charging start and end times are set such that as soon as the EV reaches its target SOC, it is dispatched on a trip, meaning that the period of time spent at a high SOC is reduced. However, this is not possible to the same extent with EV2 and EV3 as it is with EV1 in the case of Figure 6. The other constraints on the optimisation process mean that the charging start and finish times for EV2 can only be pushed so far towards the end of the time period that EV2 is available for charging. For EV3, the constraints mean the charging start and finish times cannot be moved further towards the end of the time period that EV3 is available for charging than the base-case charging profile of commencing charging as soon as the EV is available for charging.

Figure 6 further illustrates how the present method and system can provide optimised future charging profiles that converge the batteries' SOH towards each other. In Figure 6, EV1 is the EV with the lowest SOH, followed by EV2, and EV3 has the highest SOH. Accordingly, the future charging plans determined by the optimisation process prioritise the maintenance of EV1's SOH over EV2's SOH and prioritise the maintenance of EV2's SOH over EV3's SOH. This is illustrated by the fact that EV1, which has the lowest SOH, is the EV whose charging period (03:00 - 06:00) is shifted furthest towards the end of the time period in which the three EVs are all available for charging (22:00 - 06:00). Of the three charging profiles for EV1, EV2 and EV3 between 21:00 and 06:00 in Figure 6, the charging profile assigned to EV1's future charging plan is the charging profile with the lowest battery SOH deterioration rate, this is followed by EV2's charging profile in this part of its future charging plan, and then EV3's charging profile in this part of its future charging plan, which is the most detrimental to battery SOH of the three charging profiles.

Figure 7 includes further details of the future charging plans developed by the system 1 in conjunction with the future travel plans. The future charging plans in Figure 7 for EV1, EV2 and EV3 are the same as those shown in Figure 6, but Figure 7 also includes plots 701, 702, 703 showing the respective changes in SOC over time of the batteries in EV1, EV2 and EV3. In the plot, the gradient of the lines indicates the charging and discharging rates of the batteries according to the plans. The future charging plans result in the batteries being subjected to a variety of different charging rates both in respect of a given battery and between different batteries.

Similarly to Figure 6, the information on the future charging plans presented in Figure 7 illustrates another way in which the future charging plans have been optimised. Figure 7 shows how the charging rates of the batteries have been controlled in comparison to the base-case charging profile of charging at maximum charging rate as soon as the EV reaches the charging station. As discussed above, the gradients of the lines in the plot in Figure 7 represent the charging rates of the batteries. It is evident that the charging rate of EV1 between 03:00 and 06:00 is less than the charging rate of EV2 between 00:00 and 03:00. Similarly, the charging rate of EV2 between 15:00 and 16:30 is less than the charging rate of EV3 between 17:00 and 18:00. As discussed in relation to Figure 5C, reducing the charging rates where possible can reduce the rates of battery SOH deterioration caused by the future charging plans.

Figure 7 further illustrates how the present method and system can provide optimised future charging profiles that converge the batteries' SOH towards each other. As in Figure 6, EV1 has the lowest SOH, followed by EV2 and then EV3. Comparing the charging rates of EV1, EV2 and EV3 in Figure 7 in their respective charging periods between 21:00 and 06:00, it is evident that the SOH of EV1 is prioritised over the SOH of EV2 and EV3, and that the SOH of EV2 is prioritised over the SOH of EV3. EV1 has the charging profile in this period with the lowest charging rate, EV2's charging profile in this period has a charging rate that is higher than EV1's, and EV3 has a charging profile in this period that has a charging rate that is higher than both EV1's and EV2's.

As discussed above in relation to Figure 2, in order for the optimisation process to seek to minimise battery SOH deterioration rates, the optimisation process may operate on an objective function that includes an expression for the deterioration rate of battery SOH, $\frac{d(SOH)}{dt}$.

Moreover, it is desirable that the optimisation process seeks to determine future charging plans that converge the SOH of the batteries towards each other such that the batteries all arrive at a predetermined cut-off state of health at the same time. This then means that the SOH of each of the batteries will be similar or the same when a point in time is reached that the SOH of a battery becomes too low for the associated EV to execute its travel plan under any charging plan (i.e. the SOH of the battery is so low that the battery is unable to store sufficient energy to even conduct a single trip in its travel plan). This is desirable because the replacement of a plurality, or all, of the batteries of the EV's within the fleet can then be performed simultaneously, since they are all similarly deteriorated. This reduces maintenance costs associated with the battery replacement process.

One way in which to provide an optimisation process with an objective function that achieves the above-described aims is to generate an expression for an overall deterioration rate of battery SOH that is a weighted linear combination of the deteriorations rates of battery SOH for each of the batteries of the EVs:

$$\frac{d(SO\text{H})}{dt}\bigg|_T = \sum_{i=1}^{N} x_i \cdot \frac{d(SOH_i)}{dt}$$

Where $N$ is the number of EV's within the fleet that optimised charging plans are being provided for, $SOH_i$ is the SOH of the battery in EV i, $\frac{d(SO\text{H})}{dt}\big|_T$ is the overall deterioration rate of battery SOH, and $x_i$ is the weighting for the battery in EV $i$. This expression can then be included in the objective function.

In order for the optimisation process to determine future charging plans that converge the SOH of the batteries to towards each other on minimisation of $\frac{d(SOH_T)}{dt}$, the weightings $x_i$ in the above function are set such that they are negatively correlated with the SOH of the batteries, i.e. the lower the SOH of a battery, the greater the respective weighting. The correlation may be a simple linear relationship between $SOH_i$ and $x_i$ (e.g. $x_i = 1 - SOH_i$). Because the batteries with the lowest SOH have the largest weightings, the minimisation of this expression prioritises the reduction in $\frac{d(SOH_i)}{dt}$ in batteries with the lowest SOH as the weightings mean that the terms in the above objective function relating to these batteries contribute the largest amount to the value of $\frac{d(SOH_T)}{dt}$.

Alternatively, a second method by which to execute the optimisation process with an expression for deterioration rate of battery SOH, $\frac{d(SOH)}{dt}$ included in the objective function such as to provide future charging plans that converge the SOH of the batteries towards each other with a non-zero convergence value is that set out in the flowchart in Figure 8.

Firstly, at step S210, the N batteries of the EV's for which optimised future travel plans are to be determined are ranked based on SOH, with the battery with the lowest SOH ranked first, the battery with the second lowest SOH ranked second, and so on. At step S220, an iterative loop is started and the first battery in the ranking is selected (iterative counter, i = 1). The future charging plan for the first battery in the ranking is then determined independently of the other batteries at step S230 by an optimisation that seeks to minimise the rate of deterioration of the first battery's SOH with an objective function including an expression for the deterioration rate of the first battery's SOH, $\frac{d(SOH_1)}{dt}$.

Then, at step S240, the method comprises checking whether all the batteries have had their charging plans determined. If there are still further charging plans to determine (i < N), then the iterative loop is re-started after steps S250 and S260 are conducted.

Having determined the future charging plan for the first battery in the ranking and determined that there are further future charging plans to determine, at step S250 the constraints on the future charging plans for batteries 2 to N in the ranking are updated based on the future charging plan for the first battery. For instance, where the optimisation process has the second constraint of the future charging plans to stay within the charging capacity of the electrical power grid that is powering the electric vehicle chargers then an effective charging capacity available for batteries 2 to N according to the second constraint can be updated to reflect the charging capacity that is already assigned to the first battery. The iterative counter, i is then incremented at step S260 and the process of determining the future charging plan for the second battery in the ranking is then conducted (step S230).

The iterative loop continues until there are no further future charging plans to determine (i = N), at which point the method then proceeds to step S270 and the optimisation process is complete.

The first future charging plan determined is for the battery with the lowest SOH, at which point the feasible region defined by the constraints on the charging plan is largest because there are no other future charging plans that have modified the original constraints and reduced the size of the feasible region. However, when determining future charging plans for subsequent batteries in the ranking, which have greater SOH, the feasible region will be smaller and certain local minima for the objective function that were present in the feasible region when determining the future charging plan for the first battery in the ranking may no longer lie within the updated feasible region. Accordingly, by determining the future charging plans for the batteries sequentially in order of increasing SOH, reducing the deterioration rate of batteries with low SOH is prioritised over reducing the deterioration rate of batteries with high SOH. This means that, on operating the fleet of EVs under the optimised future charging plans, the SOH of the batteries will converge towards each other.

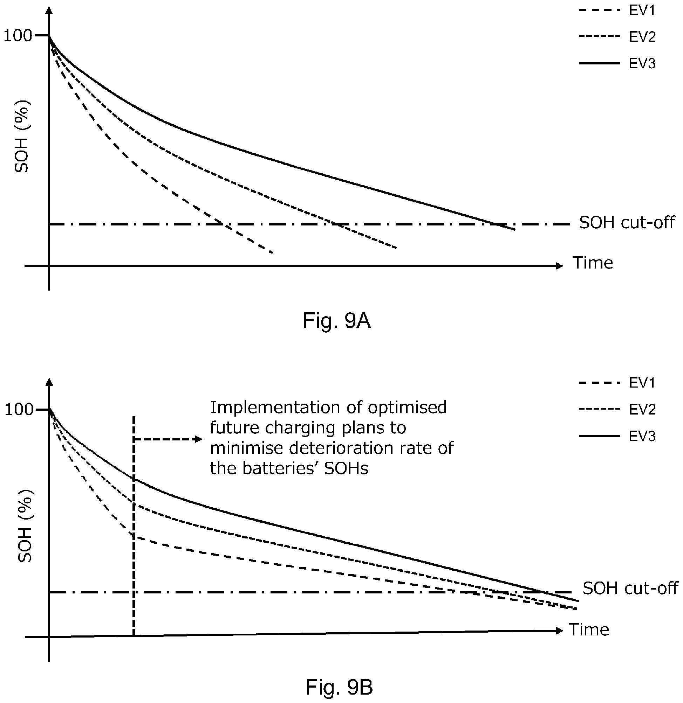

Figures 9A and 9B together illustrate the impact of implementing the optimised future charging plans on the deterioration rate of the batteries in EV1, EV2 and EV3 discussed in relation to Figures 4, 5 and 6, and the ability of the method and system described herein to seek to converge the SOH of the batteries towards each other such that the batteries all arrive at a predetermined cut-off state of health at the same time..

Figure 9A are schematic plots showing the relationship between battery SOH and time for EV1, EV2 and EV3 in Figure 4 over the course of multiple charge-discharge cycles when operating under charging plans that have not undergone any optimisation process that seeks to minimise the deterioration rate of the batteries' SOH (e.g. the batteries are charged to 100% as soon as the respective vehicles complete their planned trips). The SOH of the batteries of the three EVs diverge as time progresses, with the steep gradient of the line for EV1 indicating that the SOH of its battery is deteriorating at a faster rate than the rate at which battery SOH is deteriorating for EV2, which itself is deteriorating at a faster rate than the battery of EV3. As discussed above, there is a minimum SOH that a battery must have in order for the associated EV to be able to execute its associated travel plan under any charging plan (i.e. the SOH of the battery is so low that the battery is unable to store sufficient energy to even conduct a single trip in its travel plan). This minimum SOH is marked as a 'SOH cut-off' in Figures 9A and 9B. Figure 9A shows how operating the fleet of EVs under charging plans that have not been optimised in accordance with the present disclosure result in the batteries of those EV's reaching the SOH cut-off at significantly different times to each other.

Figure 9B is a graph showing the relationship between battery SOH and time for EV1, EV2 and EV3 over the course of multiple charge-discharge cycles when (i) operating in an initial period under the same charging plans as in Figure 9A, but (ii) thereafter operating under charging plans in Figures 5 and 6, which have undergone an optimisation process that seeks to minimise the deterioration rate of the batteries' SOHs (see annotation to the plot in Figure 9B indicating when the optimised future charging plans are implemented). Comparing Figures 9A and 9B, it is evident that the implementation of the optimised future charging plans reduces the deterioration rate of battery SOH for all three EVs in comparison to the respective deterioration rates of battery SOH under the charging plans implemented in Figure 9A: the time taken for each battery to reach the SOH cut-off is substantially longer in Figure 9B than in Figure 9A. Additionally, the deterioration rates of battery SOH for the batteries in Figure 9B once the optimised charging plans have been implemented are more similar to each other than in Figure 9A, and the deterioration rate of battery SOH for each battery are also such that the SOH of the batteries converge towards each other. This convergence arises because an objective of the optimisation process is to determine future charging plans which have the batteries all arrive at a predetermined 'SOH cut-off' at the same time. Thus, not only are the optimised future charging plans provided by the system and method according to the present disclosure able to increase the lifetime of the batteries implementing the charging plans, but they can also decrease the cost of maintenance associated with replacing the batteries of the EVs, since all the batteries of all the EVs can be replaced simultaneously.

The term 'battery' as used herein incorporates an electrochemical device including a plurality of electrochemical cells, wherein the plural cells may be arranged into a plurality of cell modules.

The systems and methods of the above embodiments may be implemented in a computer system (in particular in computer hardware or in computer software) in addition to the structural components and user interactions described.

The term 'computer system' includes the hardware, software and data storage devices for embodying a system or carrying out a method according to the above described embodiments. For example, a computer system may comprise a central processing unit (CPU), input means, output means and data storage. The computer system may have a monitor to provide a visual output display. The data storage may comprise RAM, disk drives or other computer readable media. The computer system may include a plurality of computing devices connected by a network and able to communicate with each other over that network, and in such instances may be referred to as a computer network.

The methods of the above embodiments may be provided as computer programs or as computer program products or computer readable media carrying a computer program which is arranged, when run on a computer, to perform the method(s) described above.

The term 'computer readable media' includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

In particular, although the methods of the above embodiments have been described as being implemented on the systems of the embodiments described, the methods and systems of the present disclosure need not be implemented in conjunction with each other, but can be implemented on alternative systems or using alternative methods respectively.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Reference Numbers

[0107]

| | |
|---|---|
| 1 | Operational management system |
| 10 | Future travel plan |
| 20 | Battery data |
| 30 | Charging capacity data |
| 40 | Charging capability data |

| 50 | Constraint decision unit |
| 51 | Charging time management unit |
| 52 | Power management unit |
| 60 | Future charging plan decision unit |
| 70 | Future charging plan |
| 80 | Charging station |
| 81 | Electric vehicle charger |
| 82 | Power source |
| 90 | Electric vehicle |
| 91 | EV Battery |
| 92 | Communications unit |
| 100 | Database |
| 400, 600 | Grid power availability |
| 601, 602, 603 | Electric vehicle charging power demand |
| 604 | Total charging power demand |
| 701, 702, 703 | EV state of charge |

**Claims**

1. A computer-implemented method of providing optimised future charging plans (70) for charging batteries (91) of electric vehicles (90) of a fleet of electric vehicles (90) using electric vehicle chargers (81), the method comprising the steps of:

   obtaining respective future travel plans (10) for the electric vehicles (90);
   obtaining battery data (20) for the batteries (91) of the electric vehicles (90), the battery data (20) including, for each electric vehicle (90), battery state of charge (701, 702, 703) and battery state of health; and
   executing an optimisation process to determine future charging plans (70) for charging the electric vehicles (90) using the electric vehicle chargers (81), the optimisation process having one or more constraints, including a first constraint that requires the future charging plans (70) to increase the batteries' (91) states of charge to allow the electric vehicles (90) to perform their respective future travel plans (10);
   wherein, within the one or more constraints, the optimisation process seeks to minimise deterioration rates of the batteries' (91) states of health.

2. The computer-implemented method according to claim 1, wherein:

   the electric vehicle chargers (81) are powered by an electrical power grid;
   the method further comprises a step of obtaining future charging capacity data (30) of the electrical power grid; and
   the optimisation process has a second constraint that requires the future charging plans (70) to stay within the future charging capacity (30) of the electrical power grid.

3. The computer-implemented method according to any preceding claim, wherein:

   the method further comprises a step of obtaining charging capability data (40), the charging capability data (40) including, for each electric vehicle (90), a maximum charging rate of the electric vehicle's battery (81); and
   the optimisation process has a further constraint that requires the future charging plans (70) to stay within the maximum charging rates of the electric vehicles batteries (91).

4. The computer-implemented method according to any preceding claim, wherein the optimisation process operates on an objective function that includes an expression for deterioration rate of battery state of health.

5. The computer-implemented method according to any preceding claim, wherein the optimisation process seeks to determine future charging plans (70) that converge the states of health of the batteries (91) towards each other such that the batteries (91) all arrive at a predetermined cut-off state of health at the same time.

6. The computer-implemented method according to claim 5, wherein executing the optimisation process comprises:

determining the future charging plans (70) of the batteries (91) sequentially in ascending order of their respective states of health, starting with the battery (91) with the lowest state of health; and

after the future charging plan (70) is determined for each battery (91) in the ascending order sequence and before the future charging plan (70) is determined for the next battery (91) in the ascending order sequence, updating the one or more constraints for the remaining batteries (91) in the ascending order sequence such that the one or more constraints for the remaining batteries (91) account for the determined future charging plans (70).

7. The computer-implemented method according to claim 5, wherein executing the optimisation process comprises:

generating an expression for an overall deterioration rate of battery (91) state of health that is a weighted linear combination of deterioration rates of batteries' (91) states of health, the weightings being set according to the states of health of the batteries (91); and

executing the optimisation process with said expression included in the objective function.

8. The computer-implemented method according to any preceding claim, wherein the future travel plan (10) for each electric vehicle (90) includes:

an indication of one or more time periods when the electric vehicle (90) is in use;

an indication of one or more time periods when the electric vehicle (90) is available for charging; and

an estimated energy use and/or power use profile for the one or more time periods when the electric vehicle (90) is in use.

9. The computer-implemented method according to any preceding claim, wherein the future charging plans (70) include one or more future charging plan variables, and the optimisation process determines the future charging plans (70) by varying the one or more future charging plan variables, the future charging plan variables being selected from the group consisting of:

a charging rate of the battery (91);

a state of charge (701, 702, 703) at the end of a charging period;

an average state of charge (701, 702, 703) of the battery (91) during a period when the electric vehicle (90) is available for charging;

a charging frequency;

an average state of charge (701, 702, 703) of the battery (91) during execution of the future travel plan (10);

a start time of a charging period; and

an end time of a charging period.

10. The computer-implemented method according to any preceding claim, wherein the optimisation process comprises:

accessing a database (100) containing a plurality of charging profiles and associated battery state of health deterioration rates, wherein each charging profile relates to a given battery state of health and is a line on a plot of battery state of charge (701, 702, 703) against time; and

constructing a future charging plan (70) by assigning from the database (100) one or more charging profiles whose related battery states of health match that of the electric vehicle (90) to one or more time periods when the electric vehicle (90) is available for charging.

11. The computer-implemented method according to any preceding claim, further comprising a step of communicating the future charging plans (70) to the corresponding electric vehicles (90), and/or to the electric vehicle chargers (81), for automatic implementation of the future charging plans (70).

12. A procedure for charging batteries (91) of electric vehicles (90) of a fleet of electric vehicles (90) using electric vehicle chargers (81), the procedure including:

performing the method according to any preceding claim; and

charging the batteries (91) of the electric vehicles (90) using the electric vehicle chargers (81) by implementing the future charging plans (70) determined by the method.

13. A computer-implemented operation management system (1) configured to implement the method of any of claims

**1-11.**

**14.** A computer program arranged, when run on a computer, to perform the method of any of claims 1 - 11.

**15.** A computer readable storage medium carrying the computer program according to claim 14.

Fig. 1

Fig. 2

S110   S120   S130   S140

| Obtain future travel plans | Obtain battery data | Obtain charging capacity data | Obtain charging capability data |

S200

| Execute optimisation process |

Fig. 3

EP 4 424 545 A1

|  | 00:00 | 06:00 | 12:00 | 18:00 | 24:00 |

time

EV1 (Low SOH)

EV2 (Mid SOH)

EV3 (High SOH)

Power
(MW)

400

Driving     Available charge time

Fig. 4

## Base Case

Fig. 5A

## No. 1

Fig. 5B

## No. 2

Fig. 5C

No. 3

Fig. 5D

No. 4

Fig. 5E

No. 5

Fig. 5F

Fig. 6

Fig. 7

Legend:
- Driving
- Available charge time
- Assigned time slot for charging

EP 4 424 545 A1

S210

Rank *N* batteries based on SOH

S220

*i = 1*

S230

Determine future charging plan for battery *i* in ranking

S240

Yes

*i = N ?*

No

S250

Update constraints for batteries *i+1* to *n* in ranking

S260

*i = i + 1*

S270

Optimisation complete

Fig. 8

Fig. 9A

Implementation of optimised future charging plans to minimise deterioration rate of the batteries' SOHs

Fig. 9B

**EP 4 424 545 A1**

Europäisches
Patentamt
European
Patent Office
Office européen
des brevets

# EUROPEAN SEARCH REPORT

Application Number

EP 23 15 9132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HOUBBADI ADNANE ET AL: "Smart charging of electric bus fleet minimizing battery degradation at extreme temperature conditions", 2021 IEEE VEHICLE POWER AND PROPULSION CONFERENCE (VPPC), IEEE, 25 October 2021 (2021-10-25), pages 1-6, XP034082673, DOI: 10.1109/VPPC53923.2021.9699367 [retrieved on 2022-01-31] | 1-4,8, 11-15 | INV. B60L53/62 B60L53/63 B60L58/16 H02J7/00 |
| Y | * title * * abstract * * page 3, column 1, paragraph 4 * * page 3, column 2, paragraph 1 - paragraph 14 * * page 6, column 1, paragraph 4 * * equations 3-11, equation 14 * | 5,6,10 | |
| X | SHARIFI POUYA ET AL: "Leveraging owners' flexibility in smart charge/discharge scheduling of electric vehicles to support renewable energy integration", COMPUTERS & INDUSTRIAL ENGINEERING, PERGAMON, AMSTERDAM, NL, vol. 149, 18 August 2020 (2020-08-18), XP086315988, ISSN: 0360-8352, DOI: 10.1016/J.CIE.2020.106762 [retrieved on 2020-08-18] | 1,3,4,9, 12-15 | TECHNICAL FIELDS SEARCHED (IPC) B60L H02J |
| Y | * page 3, column 1, paragraph 10 * * page 4, column 2, paragraph 2 * * page 5, column 1, paragraph 1 * * page 5, column 2, paragraph 5 - paragraph 6 * * page 5, column 2, paragraph 9 * * page 6, column 1, paragraph 6 * * equations 3, 5, 6, 9, 10 * | 5-7,10 | |

-/--

The present search report has been drawn up for all claims

| Place of search | Date of completion of the search | Examiner |
|---|---|---|
| The Hague | 10 August 2023 | Lutz, Tobias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

# EUROPEAN SEARCH REPORT

Application Number

EP 23 15 9132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/219561 A1 (KOBUNA SHUNSUKE [JP] ET AL) 14 July 2022 (2022-07-14) * paragraph [0024] * ----- | 5-7 | |
| Y | CN 112 311 045 A (UNIV CHANGSHA SCIENCE & TECH) 2 February 2021 (2021-02-02) * abstract * ----- | 10 | |

TECHNICAL FIELDS
SEARCHED      (IPC)

The present search report has been drawn up for all claims

| Place of search | Date of completion of the search | Examiner |
|---|---|---|
| The Hague | 10 August 2023 | Lutz, Tobias |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 23 15 9132

10-08-2023

| Patent document cited in search report | | Publication date | Patent family member(s) | | Publication date |
|---|---|---|---|---|---|
| US 2022219561 | A1 | 14-07-2022 | CN 114765380 | A | 19-07-2022 |
| | | | DE 102022100582 | A1 | 14-07-2022 |
| | | | JP 2022109168 | A | 27-07-2022 |
| | | | US 2022219561 | A1 | 14-07-2022 |
| CN 112311045 | A | 02-02-2021 | NONE | | |

EPO FORM P0459

For more details about this annex : see Official Journal of the European Patent Office, No. 12/82